# EUROPÄISCHE PATENTSCHRIFT

(11) **EP 1 358 056 B1**
(45) Veröffentlichungstag und Bekanntmachung des Hinweises auf die Patenterteilung: **18.05.2005**
(21) Anmeldenummer: 01949181.0
(22) Anmeldetag: 24.07.2001
(51) Int. Cl.: B29C 45/46, B29C 45/77

(54) **VERFAHREN ZUR STEUERUNG DES EINSPRITZVORGANGES SOWIE EINSPRITZEINHEIT**
METHOD FOR CONTROLLING THE INJECTION PROCESS AND INJECTOR UNIT
PROCEDE POUR PILOTER LE PROCESSUS D'INJECTION ET UNITE D'INJECTION

(30) Priorität: 07.02.2001 CH 206012001; 18.07.2001 CH 132401
(43) Veröffentlichungstag der Anmeldung: 05.11.2003
(73) Patentinhaber: Netstal-Maschinen AG, 8752 Näfels (CH)
(72) Erfinder: LIND, Andreas, CH-8854 Galgenen (CH)
(74) Vertreter: Ackermann, Ernst
(86) Internationale Anmeldenummer: PCT/CH2001/000458
(87) Internationale Veröffentlichungsnummer: WO 2002/062555

(56) Entgegenhaltungen:
- EP-A- 0 513 774
- WO-A-01/03906
- US-A- 3 052 925

## Beschreibung

### Technisches Gebiet

Die Erfindung betrifft ein Verfahren zur Steuerung/Regelung des Einspritz- und Kompressionshubes für den Einspritzvorgang in die Kavitäten von Spritzgiesswerkzeugen, insbesondere für das Spritzen von dünnwandigen Spritzgiessteilen mit einer elektrisch oder hydraulisch angetriebenen Einspritzschnecke, wobei ein Aktivverschluss bei einem optimalen Druck im Kompressionsraum bzw. bei einer optimalen Schmelzekompression kontrolliert geöffnet wird und den Übergang von der Schmelzekompression zu der Volumenstromübertragung herstellt, ferner eine Einspritzeinheit insbesondere für das Spritzen von dünnwandigen Spritzgiessteilen in Spritzgiesswerkzeugen, mit einem steuerbaren Aktivverschluss für die Düsenöffnung einer elektrisch oder hydraulisch angetriebenen Einspritzschnecke, mit Steuermitteln für eine zweistufige Linearbewegung für einen Kompressionshub sowie für einen Einspritzhub der Einspritzschnecke, wobei der Aktivverschluss zwischen Kompressionshub und Einspritzhub betätigbar ist.

### Stand der Technik

Das Volumenstromübertragungsverhalten in der Einspritzphase von dem Schneckenvorraum in die Kavität des Spritzgiesswerkzeuges ist von zahlreichen Parametern abhängig und wird in der Fachwelt als ein komplexer Vorgang anerkannt. Im Plastverarbeiter 41, Jahrgang 1990, wurden die Ergebnisse von grundlegenden Versuchen der Verfasser dargestellt. Auf die Publikation wird in der Folge Bezug genommen. Messungen hatten gezeigt, dass deutliche Unterschiede zwischen dem tatsächlich in die Kavität eingebrachten Volumen und dem sich aus den geometrischen Daten und der Schneckenvorlaufgeschwindigkeit ergebenden Volumen bestehen.

In der Vergangenheit wurde vergeblich versucht, für die Werkzeugfüllung über Programme ein optimales Einspritzvolumenstromprofil zu berechnen. Als Hauptfaktor für den Unterschied erachteten die Verfasser die Schmelzekompressibilität und die Maschinendeformation. Im Artikel wird, gestützt auf die eigenen Untersuchungen, vorgeschlagen, die Verformungen, wie sie sich aus der Differenz der gemessenen Gesamtverformung und der berechneten Schmelzekompression ergeben, zunächst als elastische Maschinendeformation zu betrachten. Es zeigte sich, dass die elastische Maschinendeformation in dem Bereich der niedrigen Druckbeaufschlagung von ähnlicher Grössenordnung ist wie die Schmelzekompression. Vor der Durchführung der Messungen wurde die korrekte Funktion der Rückströmsperre für den ganzen Schliessweg sichergestellt. Trotzdem ergab sich zwischen dem theoretischen und dem tatsachlichen Fliessweg ein Unterschied von einem Faktor mit mehr als zwei. Die vorgeschlagene Ableitung der tatsächlichen Fliessfrontposition aus der theoretischen basiert auf folgenden Vereinfachungen:
Zu jedem diskreten Zeitpunkt des dynamischen Einspritzprozesses werden die gemessenen Grössen als quasistatisch angesehen. An jedem Ort in der Schmelze herrscht der gleiche Druck wie im Schneckenvorraum. Der berechnete Fliessweg lag geringfügig unter dem tatsächlich gemessenen. Als Gründe werden genannt:
   a) Im Schneckenvorraum und in der Kavität herrschen, entgegen der ursprünglichen Annahme, unterschiedlich hohe Drücke.
   b) Der Druck in der Kavität ist über dem Fliessweg nicht konstant. Er nimmt vom Anschnitt bis zur Fliessfront annähernd linear ab.
   c) Das im Schneckenvorraum befindliche Volumen verringert sich während des Einspritzvorganges ständig.
   d) Die plastifizierte Masse wurde gegenüber der Masse des Formteiles gross gewählt, zur Verkleinerung der beschriebenen Fehler.

Die Versuche wurden mit Enddrücken von 800, 1100 und 1500 bar gemacht, wobei die zeitliche Entwicklung des Druckes im Kompressionsraum in Abhängigkeit zum Dosiervolumen im Bereich von 20 - 50 Millisekunden variierte. Die Volumenstromanstiegsgeschwindigkeit nahm mit fallendem Enddruckniveau zu. Entsprechend schneller entwickelte sich der abfliessende Volumenstrom. Im weiteren Kurvenverlauf nahmen die Volumenstromänderungen ab und gingen in einen linearen Verlauf über. Der Übergang erfolgte je nach Gegendruckniveau zu einem früheren oder späteren Zeitpunkt und bei grösserem bzw. kleinerem Volumenstromniveau. Die Volumenstromänderungen über der Zeit im linearen Bereich nahmen mit steigendem Enddruckniveau zu. Daraus wird gefolgert, dass, übertragen auf den realen Spritzgiessprozess, diese Feststellung bedeuten würde, dass der in das Werkezug eintretende Volumenstrom nach einem Anlaufvorgang mit zunehmender Fliesslänge der Schmelze im Werkzeug linear ansteigt. Ferner, dass mit zunehmendem Gegendruckendwert die Differenzen zum Sollwert des Volumenstromes grösser werden. Dieser Sachverhalt wird als besonders interessant hervorgehoben, da bezogen auf die Praxis die Füllzeiten unweigerlich steigen. Besonders beim Abspritzen von Formteilen mit kleinen Querschnitten muss gemäss Fachartikel mit einem Ansteigen der Füllzeit gerechnet werden. Die Entwicklung des vergangenen Jahrzehntes hat, etwas vereinfacht ausgedrückt, zwei Tendenzen in den Vordergrund gebracht:
- Im Falle von Spritzgiessmaschinen mit hydraulischem Antrieb etablierten sich preisgünstige Maschinen für qualitativ geringere Anforderungen und dickwandige Spritzgiessteile. Höchste qualitative Anforderungen, besonders für dünnwandige Spritzgiessteile, konnten nur mit entsprechend konzipierten und teuren Maschinen erfüllt werden.
- Interessanterweise war es nicht möglich, elektrisch angetriebene Maschinen für die Herstellung von dünnwandigen Spritzgiessteilen mit höchsten Ansprüchen einzusetzen.

Die Herstellung von dünnwandigen Spritzgiessteilen blieb eine Spezialität für hydraulische Maschinen der höheren Preisklasse. Die Dynamik der beim Einspritzen bewegten Massekräfte ist hier leichter beherrschbar.

Die WO01/03906 geht aus von einem Verfahren zum Spritzgiessen, bei dem unter Druck stehender Kunststoff aus einem relativ grossen absperrbaren Vorraum nach Öffnen der Absperrung in einen Formhohlraum gespritzt wird. Ziel war, beim Spritzen von dünnen und kleinen Formteilen den Formhohlraum rasch zu füllen, wobei die Geschwindigkeit des Einspritzkolbens keine oder nur eine untergeordnete Rolle spielen soll. Der bekannte Stand der Technik wird in der WO wie folgt ausgeführt:
"Soweit man bisher bereits vor dem Öffnen einer Absperrung einen mit dem Druck im Forminnenraum vergleichbaren Druck vor der Absperrung aufgebaut hat, führte dies lediglich dazu, dass die Form zunächst teilweise durch Expansion des Kunststoffes im Vorraum gefüllt wurde, bis nach einiger Verzögerung die Wirkung des Schneckenvorschubs einsetzte."

Die WO01/03906 schlägt als Verbesserung vor, dass der Druck im Vorraum bis über 1500 bar gesteigert wird, und vor allem, dass das Volumen des Vorraumes nicht wie üblich beim Einspritzvorgang weitestgehend reduziert wird, sondern ganz oder noch überwiegend erhalten bleibt. Dabei wird der Formhohlraum lediglich durch einen adiabatischen Expansionsvorgang des im grossen Vorraum angesammelten und unter hohem Druck stehenden Kunststoffvorrates gefüllt. Durch die adiabatische Expansion erfolgt eine Abkühlung um 30°C und ein Druckabfall auf einen gewünschten Endbereich von 500 bar. Gemäss einem Beispiel kann der Vorraum im Verhältnis zu dem Formhohlraum bis zu 45 mal grösser sein, bzw. es können mit einer Vorraumfüllung 30 bis 40 Teile hergestellt werden. Für die meisten Anwendungen ist eine entsprechende Verweilzeit der heissen Kunststoffmasse in dem Vorraum sowie eine Überhitzung von 30°C nicht zulässig. Diese Lösung kann deshalb nur in ganz speziellen Fällen eingesetzt werden.

Die EP-PS 0 513 774 zeigt eine weitere Lösung des Standes der Technik mit hydraulischem Antrieb zur schrittweisen Steuerung einer Folge von Spritzgiesszyklen mit dem Ziel, dass der Nachdruck jeweils übereinstimmt mit dem Nachdruck des vorangegangenen Spritzgiesszyklusses. Zwischen der Einspritzschnecke und der Giessform wird ein Vordruck dadurch erzeugt, dass ein Schaltventil bis zum Erreichen eines Druckes entsprechend dem vorangegangenen Zyklus erreicht ist. Nach dem Öffnen des Schaltventiles bricht der Druck während dem Dosiervorgang zusammen, und wird wieder erhöht entsprechend dem vorangegangenen Zyklus. Der Aufbau des Vordruckes und des Nachdruckes erfolgt vollständig unabhängig mit dem einzigen Ziel, Werte wie beim vorangegangenen Zyklus zu erreichen. Eine solche Lösung ist für dünnwandige Teile unvorteilhaft.

### Darstellung der Erfindung

Der Erfindung wurde nun die Aufgabe gestellt, ein Verfahren sowie eine Einspritzeinheit zu entwickeln, welche eine Verbesserung des Einspritzvorganges bringt, insbesondere für die Herstellung von dünnwandigen Spritzgiessteilen, ohne Einschränkung des Einsatzgebietes.

Das erfindungsgemässe Verfahren ist dadurch gekennzeichnet, dass der Kompressonshub unterbrechungsfrei in den Einspritzhub überführt und die Öffnung des Aktivverschlusse möglichst schlagartig erfolgt.

Die erfindungsgemässe Einspritzeinheit ist dadurch gekennzeichnet, dass sie Steuer-/Regelmittel aufweist für eine zweistufige unterbrechungsfreie Linearbewegung für den Kompressionshub sowie für den Einspritzhub der Einspritzschnecke, wobei der Aktivverschluss elektrische oder hydraulische Antriebsmittel aufweist, zur möglichst schlagartigen Öffnung des Aktivverschlusses.

Gemäss einer ganz besonders vorteilhaften Ausgestaltung des Verfahrens wird der Öffnungszeitpunkt des Aktivverschlusses so gewählt, dass die Wirkung von Druckreflexionswellen vor dem Düsenloch bzw. der Werkzeugdüse verhindert wird. Vom Erfinder ist erkannt worden, dass der hochdynamische Vorgang, ganz besonders der Anlaufvorgang, im Stand der Technik in jeder nur denkbaren Richtung untersucht wurde, dass dabei aber die aktive Einflussnahme auf einen der wichtigsten Parameter, nämlich das dynamische Verhalten des Verschlusses, ausser acht gelassen wurde. Alle bisherigen Versuche der Anmelderin zeigten, dass im Falle von dickwandigen Spritzgiessteilen der gezwungenermassen grössere Aufwand für den Aktivverschluss wirtschaftlich fraglich ist, weil die damit verbundenen Verbesserungsmöglichkeiten relativ klein sind. Es stellte sich heraus, dass, je dünnwandiger das zu spritzende Teil, desto grösser ist der Vorteil. Dies erlaubt zweierlei: Erstens können mit geringerem baulichem und steuertechnischem Aufwand für die ganze Maschine, jedoch mit relativ kleinem Mehraufwand für die Kontrolle eines Aktivverschlusses, im Falle von hydraulisch angetriebenen Maschinen dünnwandige Teile mit höchster Qualität gespritzt werden. Zweitens können erstmals mittels elektromotorisch angetriebenen Einspritzschnecken dünnwandige Teile mit höchster Qualität gleicherweise wie mit hydraulichem Antrieb produziert werden. Weil bisher die relevante Grundlagenforschung primär mit den weniger problematischen dickwandigeren Teilen betrieben wurde, konnte gar nicht erkannt werden, dass ein wichtiger Teil der Kompressionsenergie unmittelbar nach dem selbständigen, unkontrollierten Öffnen eines federvorgespannten Verschlusses durch die Erzeugung einer Druckreflexionswelle vor dem Düsenloch bzw. der Werkzeugdüse nicht mehr in Volumengeschwindigkeit umgesetzt werden kann. Der im Schneckenvorraum aufgebrachte hydraulische Druck wurde im Stand der Technik in der Phase des grössten Druckes nur mangelhaft in Kompression umgesetzt. Dies, weil die Volumenstromübertragung schon während dem Druckaufbau erfolgt.

Im zweiten Fall konnte gemäss Zitat aus der WO01/03906 kein positiver Effekt erreicht werden, weil es nie gelang, den Übergang vom Druckaufbau in den Vorraum zu der Volumenstromübertragung unter Kontrolle zu bringen. Die WO01/03906 kontrolliert den Übergang gleichsam radikal, indem bei der Volumenstromübertragung die Wirkung auf den Schneckenvorschub nicht berücksichtigt wird.

Die neue Erfindung schlägt vor, den aktiven Einspritzzyklus zweiphasig durchzuführen, wobei der Kompressionshub die erste und der Einspritzhub die zweite Phase ist. Das Geheimnis der neuen Lösung liegt gleichsam darin, dass die beiden Phasen nicht durch künstliche Unterbrüche der linearen Bewegung der Einspritzschnecke, sondern durch druck- und/oder zeitmässig Kontrolliertes Steuern/Öffnen des Aktivverschlusses erzeugt werden. Dies erlaubt, die Dynamik der während des Kompressionshubes beschleunigten Massekräfte zur Unterstützung des Einspritzhubes maximal zu nutzen. Die neue Erfindung schlägt in einem überspitzten Bild dargestellt vor, eine Druckfeder mit grösstmöglicher Dynamik zu spannen, in dem Bereich der grössten Spannung das vordere Ende freizugeben und die ganze Feder unter Ausnutzung der Dynamik nach vorne zu schieben. Die Entspannung der Feder findet nicht mehr am Ort des Spannungsaufbaues, sondern weiter vorne statt. Auf den Einspritzvorgang übertragen ist es damit gelungen, die Expansion der komprimierten Spritzgiessmasse in die Form selbst zu verlagern, was den überraschend positiven Effekt erklärt. Es sind dies:
- eine bessere Volumenstromübertragung
- eine Steigerung der Fliessgeschwindigkeit
- eine raschere Formfüllung
- einen grossen Fliessweg mit grosser Fliessgeschwindigkeit
- ein grosser Druckaufbau in der Form, vor allem bei extrem dünnwandigen Teilen.

Bei der neuen Erfindung wird für den Kompressionshub die aufgebrachte Energie maximal in die Schmelzekompression umgesetzt. Die komprimierte Schmelze wird in der Folge durch beinahe schlagartiges Öffnen bei einem Optimaldruck der Schmelze mit der grösst möglichen kinetischen Energie in die Form überführt und die daraus resultierende maximale Geschwindigkeit für die Volumenstromübertragung von dem Schneckenvorraum in die Kavitäten der Form genutzt. Die Umsetzung der Kompressionsenergie bzw. der Expansion der Schmelze erst in der Form steigert entsprechend die Massegeschwindigkeit in der Form. Schon erste Laborversuche zeigten bei sehr dünnwandigen Teilen, dass die Schmelzefliessgeschwindigkeit in der Form mit der neuen Lösung wesentlich gesteigert wird. Die Schmelze legt in kürzerer Zeit einen grösseren Weg zurück, was über entsprechende Sensoren zur zeitlichen Feststellung der jeweiligen Fliessfrontposition bestätigt werden konnte. Eine weitere an sich plausible Erklärung für den überraschenden Effekt der erfindungsgemässen Lösung liegt ferner darin, dass, negativ ausgedrückt, der Effekt der gekühlten Wandteile der Kavität umso grösser ist, je dünnwandiger das Teil ist. Ein passiv und in aller Regel viel zu früh sich öffnender Verschluss, vor allem schon bei relativ kleiner Kompression, führt zu einer raschen Abkühlung in den Randzonen am Eintrittsbereich der Formkavität und schafft unverzüglich schlechte Fliessbedingungen für den nachfolgenden Massefluss. Die neue Erfindung gestattet, diese nachteilige Erscheinung weitgehend auszuschalten.

Die Erfindung betrifft ferner eine Anzahl vorteilhafter Ausgestaltungen, wofür auf die Ansprüche 2 bis 9 sowie 11 bis 16 Bezug genommen wird.

Bevorzugt wird gemäss der neuen Lösung eine maximale Steilheit des Druckanstieges bis zum aktiven Öffnen des Verschlusssystems im Rahmen der zulässigen Betriebsparameter gewählt. In der ganzen Phase des Druckanstieges wird somit die maximal mögliche Kompressionsarbeit aufgebracht. Unmittelbar nach dem Öffnen des Verschlusses stehen sowohl die gespeicherte Kompressionsenergie wie auch die weiterhin aufgebrachte maximale Förderwirkung der Einspritzschnecke auf die Kunststoffmasse bzw. auf alle beschleunigten Massen für ein Maximum an Volumenstromübertragung zur Verfügung, was die oben dargestellten optimalen Anlaufbedingungen in den Fliesskanälen schafft. Erfolgt der Antrieb der Einspritzschnecke elektromotorisch oder hydraulisch und der Druckaufbau vor dem Öffnen des Aktivverschlusses mit maximaler Dynamik, dann steht zu Beginn des Einspritzens die höchstmögliche kinetische Energie zur Verfügung, wenn die Dynamik der bewegten Teile ohne Unterbruch für das Einspritzen aufrechterhalten bleibt. Dies gilt an sich gleicherweise für den hydraulischen wie auch für den elektrischen Antrieb der Einspritzschnecke. Die neue Lösung eröffnet für die elektrisch betriebenen Maschinen ein bisher ausgeschlossenes Gebiet. Dies ist deshalb besonders wertvoll, weil elektrische Antriebe im Verhältnis zu hydraulischen Antrieben wesentlich weniger Energie pro hergestelltes Spritzgiessteil benötigen. Der Druckaufbau im Kompressionsraum und der Einspritzvorgang beim und unmittelbar nach dem Öffnungszeitpunkt des Aktivverschlusses erfolgt ohne Unterbruch mit maximaler Motorleistung. Wichtig dabei ist, dass die Antriebsmittel für die Einspritzschnecke so gewählt sind, dass die Zeitdauer des Druckaufbaues kurz ist. Der Linearantrieb für die Einspritzschnecke kann als Servomotor mit einer Regelung über den Geschwindigkeitseingang ausgebildet sein. Die neue Lösung gestattet jedoch auch den Einsatz eines kostengünstigen Antriebsmotores. Entsprechend den bisherigen Versuchen wurde als beste Lösung die Verwendung eines Nadelventiles als Aktivverschluss befunden. Der Aktivverschluss kann am Düsenausgang der Einspritzschnecke oder in dem Eintrittsbereich der Kavität des Spritzgiesswerkzeuges angeordnet werden. Dies hat für die Praxis den grossen Vorteil, dass in vielen Fällen die neue Lösung auch durch Anpassung bzw. Neubau von Werkzeugen und ohne Änderung auf der Maschinenseite realisiert werden kann.

### Kurze Beschreibung der Erfindung

In der Folge wird die neue Lösung nun an Hand einiger Beispiele mit weiteren Einzelheiten erläutert. Es zeigen:
- die Figur 1: diagrammatisch die neue Lösung mit einem Nadelventil als Aktivverschluss;
- die Figur 2a: ein Beispiel für einen Passivverschluss des Standes der Technik mit Kugeldichtung und Tellerfeder;
- die Figur 2b: ein Beispiel für einen Aktivverschluss, ausgebildet als Nadelverschluss, gemäss der neuen Lösung;
- die Figur 2c: ein Beispiel für einen Aktivverschluss mit hydraulisch kontrollierter Nadel, gemäss der neuen Lösung;
- die Figur 3: das aktiv betätigbare Nadelventil gemäss Figur 2b in grösserem Massstab, für elektrische oder hydraulische Antriebe des Nadelverschlusses;
- die Figur 4a: ein Beispiel für eine Spritzform, mit der die Versuche durchgeführt wurden;
- die Figur 4b: das Formteil der Versuchsspritzform in der Sicht gemäss Schnitt IV - IV, bzw. die Kontur der gespritzten Teile;
- die Figur 5a: schematisch eine mögliche Erklärung für die nachteilige Wirkung in Bezug auf die Strömung der Schmelze im Stand der Technik;
- die Figur 5b: die Verbesserung der Strömungsgeschwindigkeit der Schmelze gemäss der neuen Lösung;
- die Figur 6: ein Vergleich aktiver zu passiver Düsenöffnung;
- die Figuren 7, 8 und 9: drei Messkurvenbeispiele aus den Grundlagenversuchen für die neue Lösung, die Figur 7 die Kompression der Schmelze gegen eine geschlossene Düse, die Figur 8 das Spritzen durch eine Düsenöffnung von 1 mm Durchmesser bei einer Sollgeschwindigkeit von 200 mm/sec. und die Figur 9 bei einer Sollgeschwindigkeit bei 1000 mm/sec.;
- die Figur 10: die wichtigsten Parameterverläufe gemäss neuer und alter Lösung;
- die Figur 11: eine Gegenüberstellung der Öffnungszeitpunkte bei aktiver und passiver Ventilsteuerung;
- die Figur 12: die Zeit, welche die Masse A bei aktivem und B bei passivem Verschlussssystem benötigt, um vom Düsenvorraum bis zum Sensor, der am weitesten weg ist, zu fliessen:

### Wege und Ausführung der Erfindung

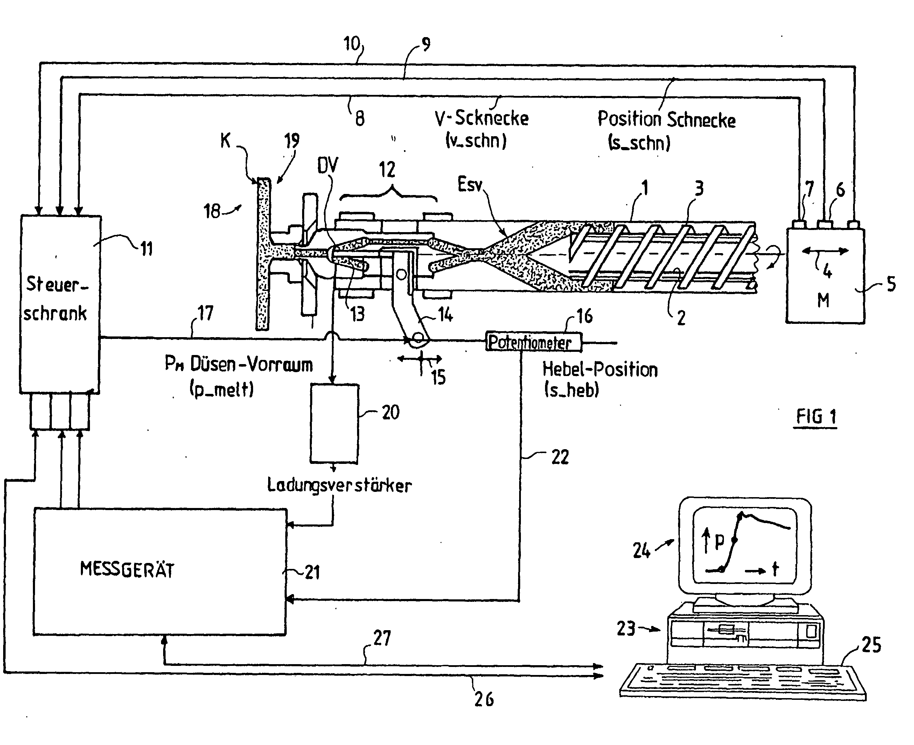

Die Figur 1 zeigt schematisch eine Versuchseinrichtung für die Grundlagenversuche, wobei die mechanischen Bauteile nur ausschnittsweise dargestellt sind. In einem Einspritzzylinder 1 befindet sich eine Einspritzschnecke 2 mit den Schneckengängen 3. Für den Linearantrieb der Einspritzschnecke 2, gemäss Pfeil 4, ist ein Kästchen M mit Bezugszeichen 5 nur schematisch angedeutet. Der Linearantrieb kann hydraulisch oder elektromechanisch erfolgen. Ebenfalls nur schematisch ist ein Positionssensor s-schn. 6 mit Bezugszeichen sowie ein Geschwindigkeitssensor v-schn. mit Bezugszeichen 7 dargestellt. Beide Sensorwerte können im Falle der Verwendung eines elektrischen Servomotores aus der Steuerelektronik bzw. den entsprechenden Signalgebern und Rechnern entnommen werden. Es wird für die Steuer- und Regeltechnik von elektrisch angetriebenen Spritzgiessmaschinen auf die EP 0 647 175 Bezug genommen. Entsprechende Steuer- bzw. Signalleitungen 8, 9 und 10 führen zu einem Steuerschrank 11. Ein Aktivverschluss 12 weist ein Nadelventil mit einer Ventilnadel 13 sowie einem Betätigungshebel 14 auf, welcher mit einem kontrollierten Antrieb (Pfeil 15) betätigt wird. Die exakte Hebelposition s-heb wird über ein Potentiometer 16 festgestellt und der Befehl für eine Positionsveränderung über eine Signalleitung 17 von der Steuerung (Steuerschrank 11) an den entsprechenden Antrieb bzw. Pfeil 15 gegeben. Der Buchstabe K steht für die Formkavität, Esv für den Einspritzschneckenvorraum. Die Formkavitat K wird durch die beiden Formhälfen 18 und 19 gebildet. Für die Versuche wurde der Schmelzedruck p_melt direkt im Düsenvorraum DV über einen entsprechenden Drucksensor gemessen und die Werte über einen Ladungsverstärker 20 an ein Messgerät 21 übermittelt. Sinngemäss wird auch die Hebelposition über eine Signalleitung 22 der Messelektronik des Messgerätes 21 gemeldet. Das Messgerät 21 sowie der Steuerschrank 11 sind an einen Rechner 23 mit Bildschirm 24 und die Eingabetastatur 25 über Steuer- bzw. Signalleitungen 26, 27 verbunden. Ganz grob verläuft der zeitliche Funktionsablauf für einen Giesszyklus etwa wie folgt:

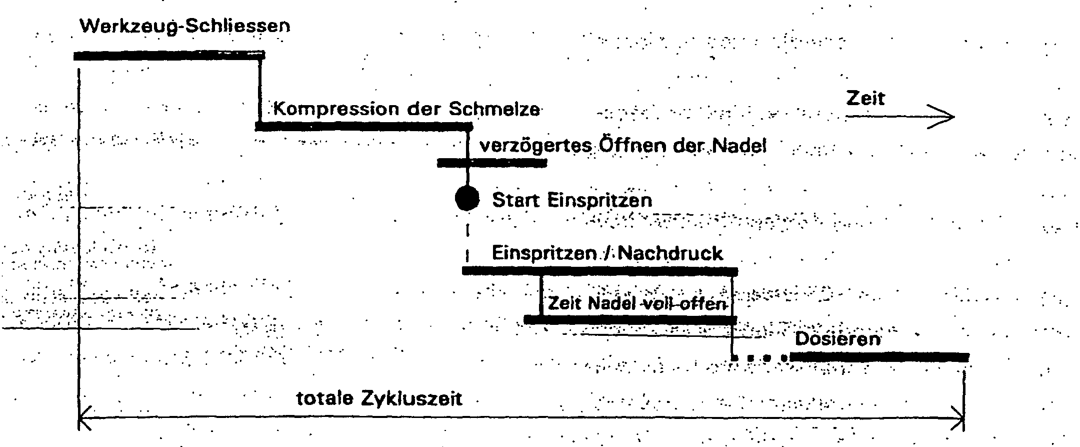

Ein zentraler Aspekt der neuen Lösung liegt in der zeitlichen Trennung des Befehls "Start Einspritzen" und dem kontrollierten Befehl "Nadel öffnen" bzw. dem eigentlichen Einspritzen in die Kavität K der Formen 18, 19. Für jeden konkreten Fall können entsprechende Programme erarbeitet und abgespeichert werden, so dass das Verschlusssystem aktiv bei einem Optimaldruck im Kompressionsraum bzw. im Düsenvorraum DV gesteuert bzw. betätigt wird. Auf diese Weise kann der sehr wichtige Zufallscharakter für das Zusammenspiel Start Einspritzen und Ventil Öffnen ausgeschlossen werden, wie dies bei allen Lösungen mit Passiv-Verschlüssen gezwungenermassen der Fall ist. Die Spritzdüse bildet den vorderen Abschluss des Plastifizieraggregates. Während dem Einspritzvorgang wird die Düse gegen die Angussbüchse des Werkzeuges gepresst. Sie stellt für die einströmende Masse die Verbindung zwischen Plastifizierzylinder und Angussbüchse des Werkzeuges her. Eine Spritzdüse sollte folgende Anforderungen erfüllen:
- strömungsgünstige Bauart
- leichte Auswechselbarkeit
- saubere Abdichtung
- Temperatur der Schmelze beibehalten.

Die bisherigen Entwicklungsanstrengungen konzentrierten sich denn auch in Richtung der genannten Anforderungen. Um den Materialaustritt während der Plastifizierphase zu verhindern, werden im Satnd der Technik verschiedenste Verschlussdüsen eingesetzt, vor allem Schiebeverschlussdüsen, welche in der Regel federvorbelastet sind. Die federvorbelasteten Schiebeverschlussdüsen werden durch die Wirkung des Massedruckes betätigt. Bei vielen Bauarten öffnet das Ventil schon beim Anpressen der Düse an das Werkzeug.

Die Figur 2a stellt beispielhaft einen Passivverschluss, eine Verschlussdüse mit Kugelverschluss des Standes der Technik dar. Eine Kugel 30, angepresst von einer kreuzweise geschlitzten Spezial-Tellerfeder 31, übernimmt bei dieser Konstruktion die Abdichtung gegenüber der Durchtrittsöffnung 32 des Düsenkörpers 33. Die Tellerfeder 31 ist gehalten zwischen dem Düsenkörper 33 sowie einem Düsenkopf 34, welcher die Übertrittsöffnung 35 in die entsprechende Formkanalöffnung aufweist.

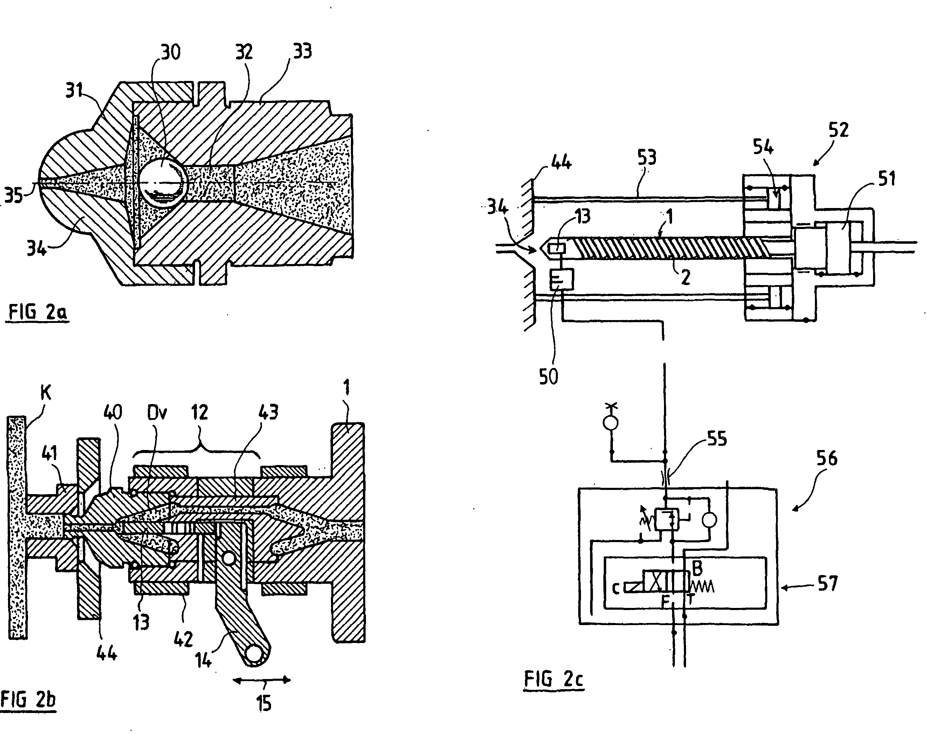

Die Figur 2b ist ein Beispiel für einen Aktivverschluss. Es handelt sich um eine Tauchkolbendüse mit radialdichtendem Nadelverschluss mit einem Tauchdüsen-kopf 40, welcher in eine Formplattendüse 41 eingeführt ist. Ein Heizband 42 sorgt für die Einhaltung der Schmelzetemperatur. Die Verschluss- oder Ventilnadel 13 ist in einem Düseneinsatz 43 verschiebbar gelagert und wird durch den Betätigungshebel 14 kontrolliert bewegt bzw. in Position gehalten. Mit dem Bezugszeichen 44 ist eine Zentrierung für den Tauchdüsenkopf 40 bezeichnet. Der Antrieb des Betätigungshebels 14 kann auf irgend eine Weise elektromechanisch oder hydraulisch erfolgen. Wichtig ist, dass die Konstruktion so ausgelegt ist, dass die Bewegungen unter den hohen Schmelzedrücken rasch erfolgen können.

Die Figur 2c zeigt schematisiert einen rein hydraulischen Antrieb, sowohl für die lineare Einspritzschneckenbewegung wie auch für die aktive Bewegung der Verschlussnadel über einen Hydraulikzylinder 50. Die Einspritzschnecke 2 wird durch einen hydraulischen Antrieb 51 linear bewegt. Das ganze Einspritzaggregat 52 ist über Säulen 53 gehalten und wird über einen weiteren hydraulischen Antrieb 54 mit dem Düsenkopf 34 auf Anschlag in die Spritzposition gefahren. Eine Drossel 55 hat die Aufgabe, eventuelle Schläge auf das System der Nadelbewegung zu vermindern. Die Kontrolle der Nadelbewegung wird über ein Regelventil 56 sowie ein Steuerventil 57 sichergestellt.

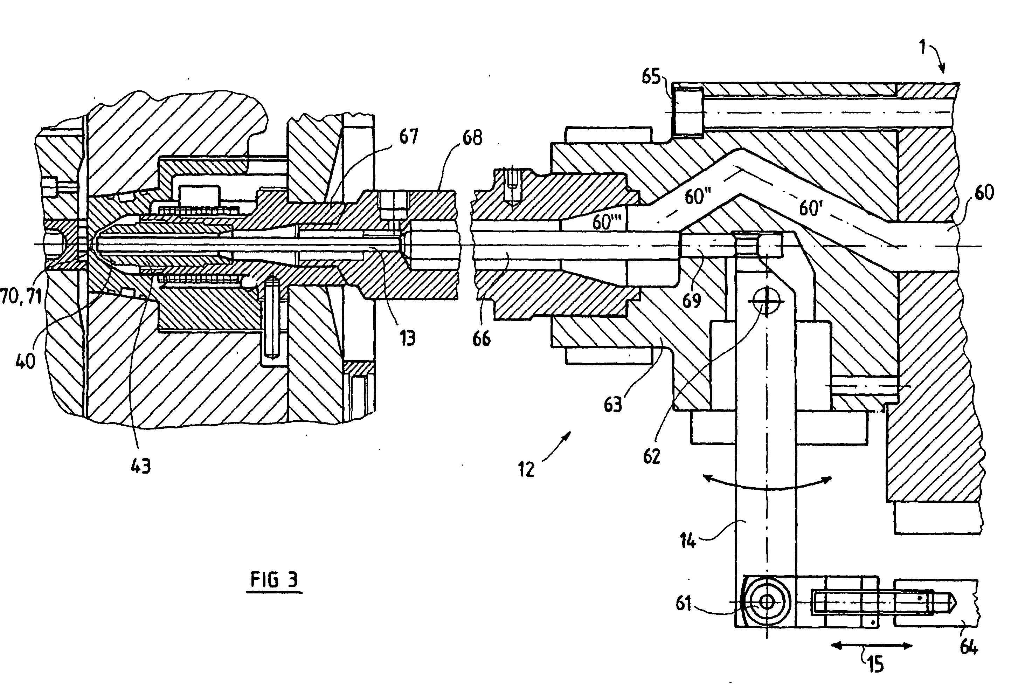

Die Figur 3 zeigt die wesentlichen Bauelemente für die Verschluss oder Ventilnadel 13 sowie die Betätigung derselben in grösserem Massstab als konkrete, konstruktive Ausgestaltung. Die Bewegung des Betätigungshebels 14, gemäss Pfeil 15, kann beliebig erfolgen. Schematisch ist nur eine Kraftübertragungsstange 64 dargestellt, welche über eine Gelenkverbindung 61 mit dem Betätigungshebel 14 verbunden ist. Der Betätigungshebel 14 ist über einen Drehbolzen 62 in einem Gelenkkopf 63 kraftschlüssig an den Einspritzzylinder 1 gelagert, wobei der Gelenkkopf 63 über Schrauben 65 an dem vorderen Ende des Einspritzzylinders 1 demontierbar befestigt ist. Damit ist eine schnelle Auswechselbarkeit voll gewährleistet. Der Massezuführkanal 60 ist knieartig mit Kanalstücken 60' sowie 60" um den Bereich des Drehbolzens herum geführt und wird durch den ringförmigen Kanal 60'" um das Nadelverlängerungsstück 66 sowie die Ventilnadel selbst herum geführt. Zwischen dem Düseneinsatz 43 und dem Gelenkkopf sind zwei Zwischenstücke 67 und 68 angebracht, welche den Tauchdüsenkopf 40 kräftemässig mit dem Gelenkkopf 63 verbinden. Die Ventilnadel 13 ist über das Nadelverlängerungsstück 66 in einer Bohrung 69 des Gelenkkopfes 63 axial verschiebbar gelagert. Die Schwenkbewegung des Betätigungshebels 14 führt zwangsweise zu der gewünschten Öffnungs- und Schliessbewegung der Nadelspitze 70 in dem entsprechenden Ventilsitz 71. Anstelle des in den Figuren 2b und 3 gezeigten Nadelventiles kann ein an sich bekannter Drehschieberverschluss oder ein Steckschieberverschluss eingesetzt werden.

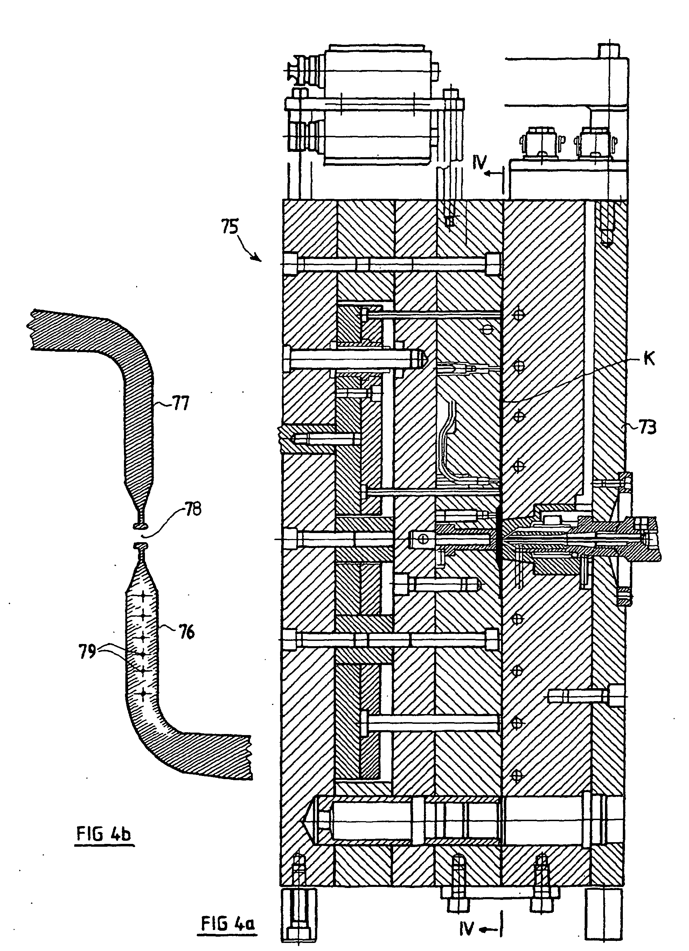

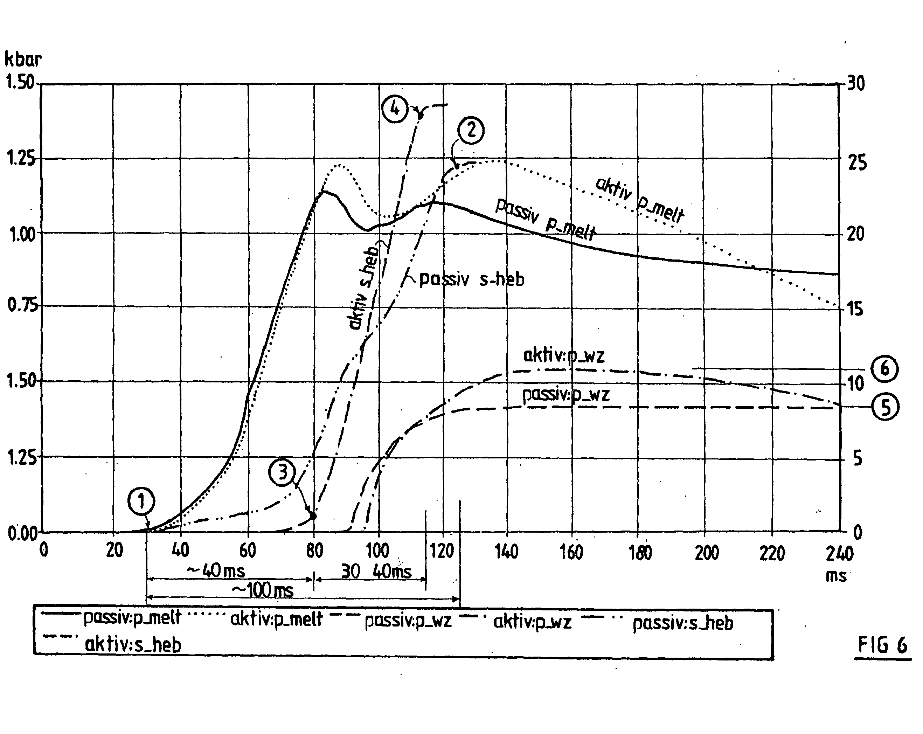

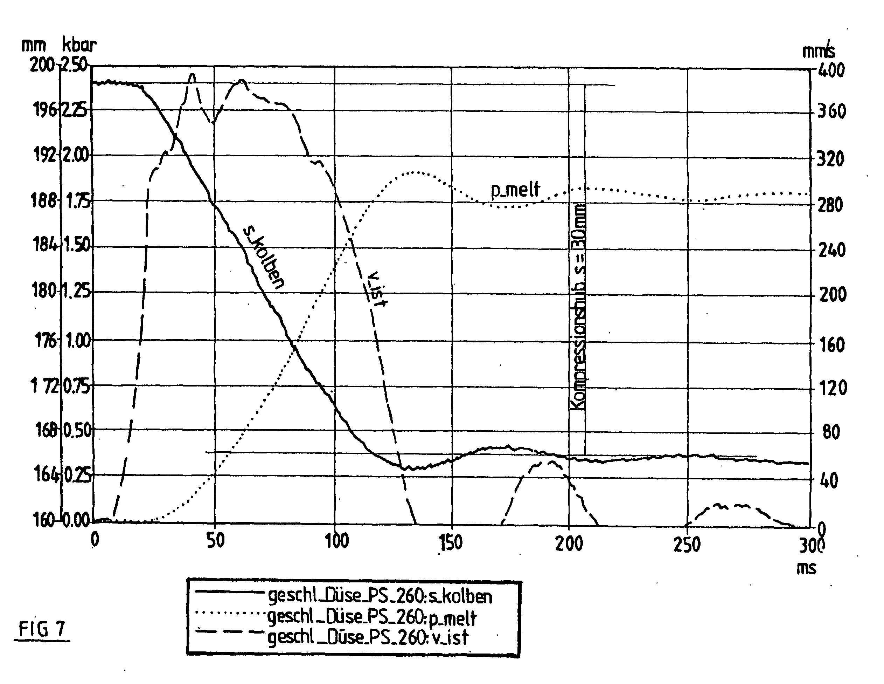

Die Figur 4a zeigt einen Schnitt durch eine vollständige Spritzgiessform 75. Dabei ist erkennbar, dass das Zwischenstück 67 in einer Platte 73 gehahen ist, welche direkt mit der Spritzgiessform verschraubt ist. Die Kavität K ergibt zwei gleiche Spritzgiessteile 76 und 77, welche je eine L-Form haben und in der Mitte durch den Anspritzpunkt 78 verbunden sind. Für die messtechnische Erfassung des ganzen Einspritzvorganges wurde sinngemäss zu dem einleitend zitierten Artikel eine Vielzahl von Messpunkten angeordnet. Es wurden dafür acht Infrarotsensoren 79 in gleichmässigen Abständen positioniert, welche den genauen Füllverlauf registrieren. Zusätzlich wurden zwei Werkzeuginnendruck-Fühler, je einer angussnahe und einer angussfern, am Ende des Fliessweges eingebaut. Die Versuche wurden jeweils mit passivem Nadelöffnen als Maschinengrundeinstellung gestartet. Anschliessend wurde auf "Aktives Öffnen" umgestellt. Für die Diagramme der Figuren 6 und 7 gelten die folgenden Abkürzungen:

| | |
|---|---|
| Werkzeug | wz |
| Druck | p |
| Wege | s |
| Kolben | Kolb. |
| Position Hebel | s_heb |
| WZ-Innendruck | p_wz |
| Infrarotsensoren | Front |
| Geschwindigkeit Schnecke | v_sch |
| Position Schnecke | s_sch |
| Massendruck Düsenvorraump_melt | |

Aktiv bedeutet, dass das Verschlusssystem aktiv gemäss neuer Lösung kontrolliert wird, und passiv bedeutet, dass das Verschlusssystem ohne Zwangssteuerung entsprechend dem Stand der Technik betrieben wird.

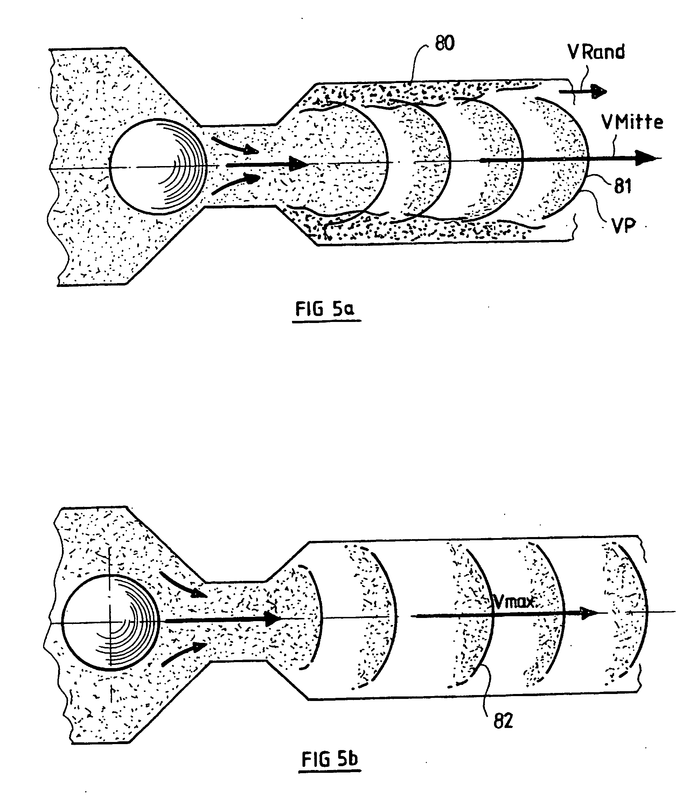

Die Figuren 5a und 5b zeigen eine Gegenüberstellung der Lösung des Standes der Technik (Figur 5a) mit der neuen Lösung (Figur 5b). Bei der Figur 5a ist das Ventil für den Anlaufvorgang schon bei tiefer Schmelzekompression geöffnet. Schematisch ist dies mit teilweise geöffnetem Ventil dargestellt. Die Geschwindigkeit der vorlaufenden Schmelze ist relativ niedrig. Der Randbereich 80 wird sofort abgekühlt. Hierdurch entsteht eine künstliche Verengung des Kanalquerschnittes mit entsprechendem, verzerrtem Geschwindigkeitsprofil 81. Die Volumenstromübertragung von dem Schneckenvorraum in die Kavität des Spritzgiesswerkzeuges wird dadurch massiv verschlechtert. Die Figur 5b zeigt idealisiert die Situation bei der neuen Lösung, symbolisch mit vollständig geöffnetem Ventil dargestellt. Weil schlagartig der maximale Druck bzw. die maximale Kompressionsenergie sowie auch die maximale Förderenergie zur Verfügung steht, ergibt sich eine breite Strömungsfront mit nahezu maximaler Geschwindigkeit Vmax. auf dem ganzen Querschnitt. Das Geschwindigkeitsprofil 82 ist entsprechend voll ausgebildet. Die Konsequenz ist eine höhere Geschwindigkeit, eine raschere Formfüllung sowie ein längerer Strömungsweg. Damit können lange dünnwandige Teile in der kürzest möglichen Zeit gespritzt werden. Dies gilt gleicherweise für den hydraulischen wie den elektromechanischen Antrieb.

Die Figur 6 zeigt sehr anschaulich einen Vergleich zwischen einer aktiven sowie einer passiven Düsenöffnung. Wie zu erwarten ist, liegen die beiden Kurven für den Schmelzedruck im Schneckenvorraum aktiv p_melt sowie passiv p_melt während dem überwiegenden Teil der Kompressionsphase direkt übereinander. Bei aktiv p_melt steigt der Druck am Ende noch um etwa 10%. Auch dies entspricht dem erwarteten Ergebnis, weil im passiven Fall kurz nach Beginn der Kompressionsphase schon Schmelze abströmt. Dies ist erkennbar aus dem Vorlauf der Hebelposition passiv s_heb, wobei sich das Ventil sofort zu öffnen beginnt. Für den vollen Öffnungsweg benötigt der Hebel im Falle der passiven Öffnung (ohne Antrieb) gemäss Versuchsbeispiele von Punkt ① zu ② ca. 100 ms. Im aktiven Fall mit Antrieb wird die Öffnungsbewegung verzögert in Bezug auf den Beginn der Kompression, also von Punkt ① betrachtet, um ca. 40 - 50 ms. Die Öffnungsdauer beträgt nur 30 - 40 ms zwischen Punkt ③ und ④. Der Druck aktiv p_melt liegt mehrheitlich bis zu 20% über dem Druck passiv p_melt. Die eigentliche Überraschung liegt im entscheidenden Druckunterschied der Werte aktiv p_wz und passiv p_wz. Der Druck passiv p_wz liegt bei ca. 400 bar (0,4 kbar), Punkt ⑤, wohingegen der Druck aktiv p_wz über einen grossen Zeitraum zwischen 500 und 550 bar erreicht, Punkt ⑥, also Werte, die mehr als 25% höher liegen, ohne dass für die neue Lösung irgendwelche zusätzliche Energie investiert wird.

Die Figur 7 zeigt die Kompression der Schmelze bei vollständig geschlossener Düse. Man erkennt dabei die Analogie, zumindest für den Druckverlauf, während der Kompressionsphase mit der neuen Lösung. Der Kompressionsweg beträgt 30 mm. Der Enddruck liegt bei dem Beispiel bei ca. 1,75 kbar.

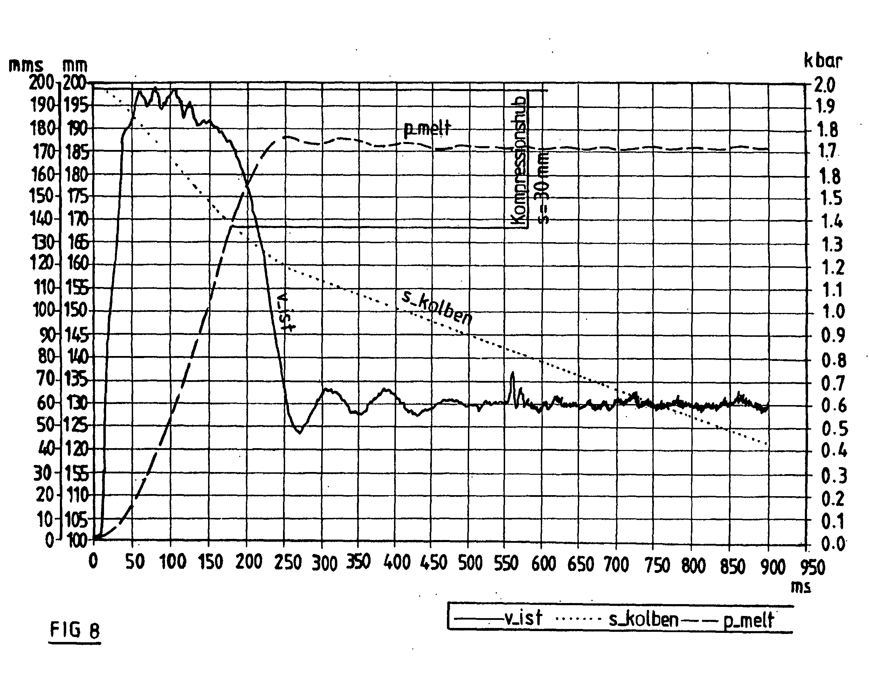

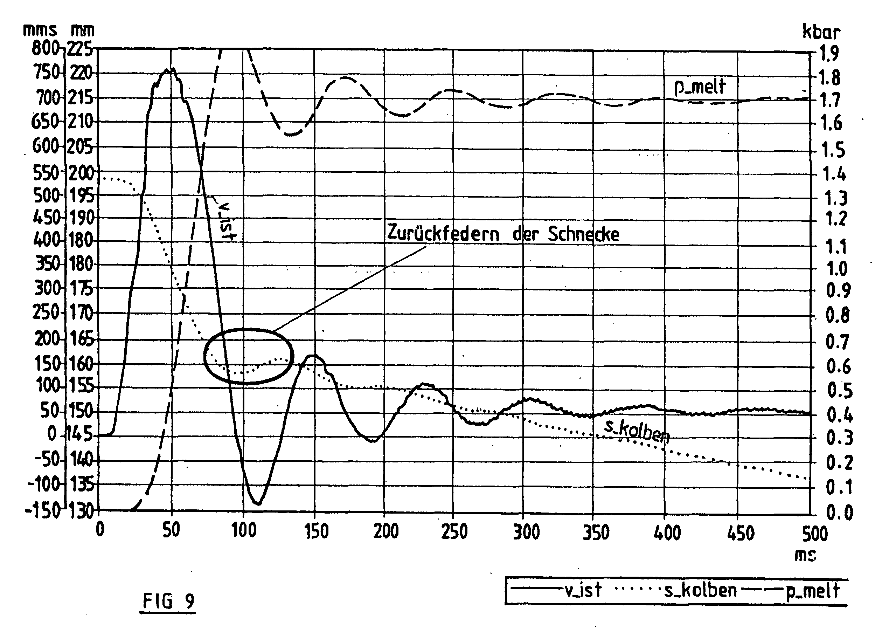

Die Figuren 8 und 9 illustrieren die Grundproblematik der Lösungen des Standes der Technik. Bei dem Beispiel gemäss Figur 8 wurde eine Sollgeschwindigkeit der Schneckenbewegung von 200 mm/sec. und bei dem Beispiel gemäss Figur 9 eine solche von 1000 mm/sec. gewählt. Aus der Figur 8 wird ersichtlich, dass die maximal mögliche "Volumenstromgeschwindigkeit" 60 mm/sec. beträgt, dies bei ca. 250 ms. Die hohe Schneckenvor-laufgeschwindigkeit von 0 - 250 ms wird praktisch nur in Schmelzekompression umgesetzt, dies trotz offener Düse.

Die Figur 9 zeigt einen hochinteressanten Effekt, wie an der Stelle mit fettem Kreis markiert ist. Die punktierte Kurve s_kolben zeigt über einen Zeitraum von etwa 50 ms eine leichte Rückwärtsbewegung. Die Schnecke federt leicht zurück. Der Grund liegt in der Wirkung von Reflexionswellen, welche erst bei höheren Geschwindigkeiten in Erscheinung treten. Das Versuchsbeispiel ist gleichsam ein Beweisstück dafür, dass im Stand der Technik mit passiver Ventilöffnung ein wichtiger Teil der Kompressionsenergie durch die zurückschlagenden Druckreflexionswellen nicht in Volumenstromgeschwindigkeit umgesetzt wird. Die neue Lösung gestattet durch kontrolliertes Öffnen des Verschlusses, vorzugsweise in dem Bereich der maximalen Kompression, die sehr nachteilige Wirkung der Reflexionswellen auszuschalten. Die Volumenstromübertragung wird in jeder Hinsicht optimal.

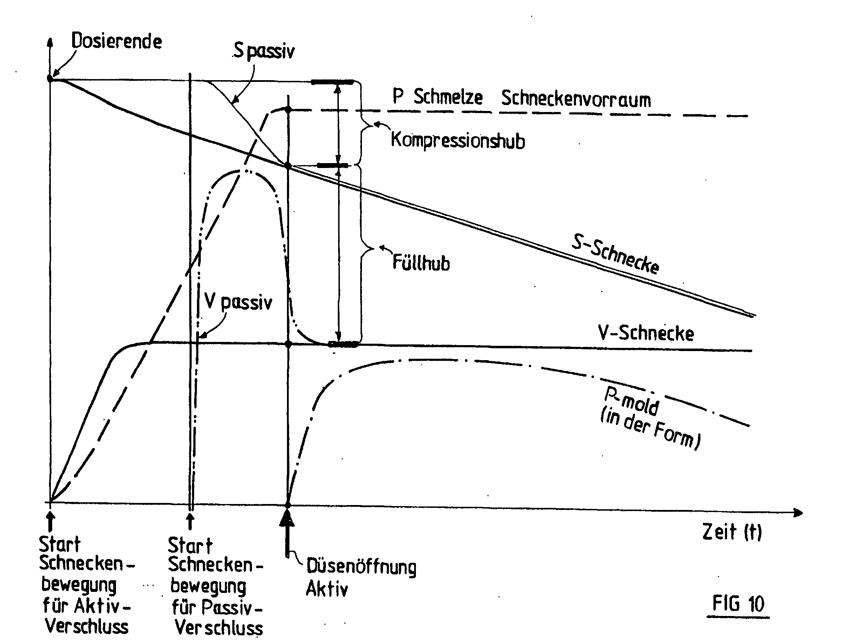

Die Figur 10 zeigt idealisiert den Verlauf der Schneckengeschwindigkeit (V-Schnecke) den Weg der Schnecke (S-Schnecke). Den Schmelzedruck im Schneckenvorraum (P-Schmelze) sowie den Druck in der Form (p_mold) insbesondere für den Fall eines elektromotorischen Schneckenantriebes. Bei der gewählten Darstellung öffnet der Verschluss (Düsenöffnung aktiv) etwa nach einem Drittel der Zeit. Der Druck der Schmelze im Schneckenvorraum bleibt vom Zeitpunkt der Düsenöffnung bei maximalem Druck etwa konstant. Der Druck in der Form steigt zunächst von Null steil an und bleibt während längerer Zeit relativ hoch. Aus der Darstellung geht hervor, dass über dem Zeitabschnitt der Düsenöffnung die Geschwindigkeit der Schnecke (V-Schnecke) bzw. der zurückgelegte Weg der Schnecke (S-Schnecke) über der Zeit (t) unverändert bzw. stetig bleibt. Der Kompressionshub der Schnecke geht unterbrechungsfrei in den Schneckenfüllhub bzw. Einspritzhub über. Der motorische Antrieb durchfährt beide Bereiche unterbrechungsfrei, weil das Timing der aktiven Düsenöffnung genau auf die Kompression und die Volumenübertragung angepasst ist. Strichliert ist als Gegenüberstellung die Geschwindigkeit der Schnecke beim passiven Öffnen des Verschlusses, entsprechend der Weg der Schnecke (passiv) für den klassischen Stand der Technik beim hydraulischen Antrieb der Einspritzschnecke. Bei passivem Öffnen des Düsenverschlusses wird die Einspritzschnecke bei Beginn des Einspritzzyklusses weit über das erforderliche Mass beschleunigt, so dass die Geschwindigkeit für die Volumenstromübertragung auf die Hälfte zurückfällt.

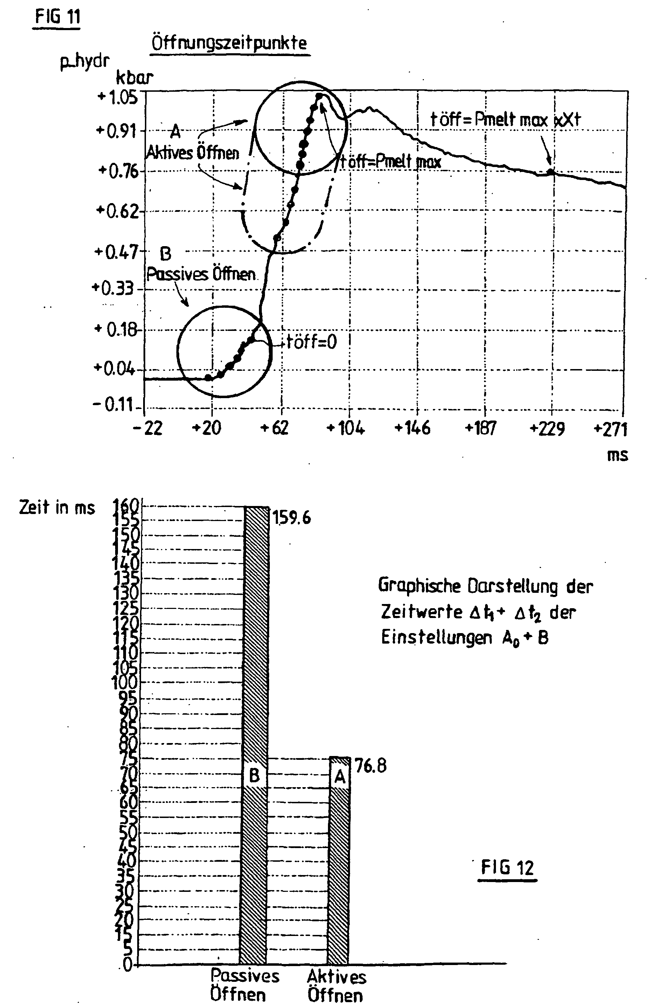

Die Figuren 11a und 12b zeigen die Gegenüberstellung von aktivem und passivem Verschlusssystem, wobei A das aktive Öffnen und B das passive Öffnen bedeutet. Die Zeit in Millisekunden besagt, wieviel Zeit die Masse benötigt, um vom Düsenvorraum bis zum letzten Sensor zu fliessen. Beim aktiven Verschlusssystem der neuen Lösung werden 82,8 ms oder 52% weniger Zeit gegenüber dem passiven Verschlusssystem des Standes der Technik benötigt für das Zurücklegen des selben Weges der Masse.

## Patentansprüche

1. Verfahren zur Steuerung/Regelung des Einspritz- und Kompressionshubes für den Einspritzvorgang in die Kavitäten von Spritzgiesswerkzeugen, insbesondere für das Spritzen von dünnwandigen Spritzgiessteilen (76, 77), mit einer elektrisch oder hydraulisch angetriebenen Einspritzschnecke, wobei ein Aktivverschluss (12) bei einem optimalen Druck im Kompressionsraum bzw. bei einer optimalen Schmelzekompression kontrolliert geöffnet wird und den Übergang von der Schmelzekompression zu der Volumenstromübertragung herstellt,
**dadurch gekennzeichnet,**
**dass** der Kompressionshub unterbrechungsfrei in den Einspritzhub überführt und die Öffnung des Aktivverschlusses möglichst schlagartig erfolgt.

2. Verfahren nach Anspruch 1,
**dadurch gekennzeichnet,**
**dass** die Schieberöffnung in der oberen Hälfte des maximalen spezifischen Schmelzedruckes im Schneckenvorraum stattfindet.

3. Verfahren nach Anspruch 1 oder 2,
**dadurch gekennzeichnet,**
**dass** der Öffnungszeitpunkt des Aktivverschlusses (12) vorzugsweise so gewählt wird, dass die Expansion der komprimierten Schmelze und die Umsetzung in Fliessfrontgeschwindigkeit primär in den Kavitäten der Form erfolgt.

4. Verfahren nach einem der Ansprüche 1 bis 3,
**dadurch gekennzeichnet,**
**dass** die Energie der bewegten Teile der während des Kompressionshubes beschleunigten rotativen und/oder translatorischen Massen zur Unterstützung des Einspritzhubes maximal genutzt wird.

5. Verfahren nach einem der Ansprüche 1 bis 4
**dadurch gekennzeichnet,**
**dass** der Antrieb der Einspritzschnecke (2) elektromotorisch erfolgt und der Druckaufbau im Schneckenvorraum vor dem Öffnen des Aktivverschlusses (12) derart erfolgt, dass die bewegten Teile der Antriebseinheit bei Beginn Einspritzen (Aktivverschluss Öffnen) über die höchstmögliche kinetische Energie verfügen.

6. Verfahren nach einem der Ansprüche 1 bis 5,
**dadurch gekennzeichnet,**
**dass** die Drehzahl des elektrischen Antriebsmotores der Einspritzschnecke bei der Öffnung des Schiebers in dem Bereich der maximalen Motordrehzahl liegt, so dass die Energie der bewegten Teile der während des Kompressionshubes beschleunigten rotativen und/oder translatorischen Massen zur Unterstützung des Einspritzhubes maximal genutzt wird.

7. Verfahren nach einem der Ansprüche 1 bis 6,
**dadurch gekennzeichnet,**
**dass** der Kompressionshub für jeden Spritzzyklus bis zu 40 % des ganzen Schneckenhubes beträgt.

8. Verfahren nach einem der Ansprüche 1 bis 7,
**dadurch gekennzeichnet,**
**dass** nach bzw. beim Öffnen der Düse die Bewegungsgeschwindigkeit der Einspritzschnecke aufrechterhalten wird zur Vermeidung einer Druckabsenkung im Schneckenvorraum.

9. Verfahren nach einem der Ansprüche 1 bis 8,
**dadurch gekennzeichnet,**
**dass** der Druckaufbau im Kompressionsraum, zumindest vor dem Öffnungszeitpunkt des Aktivverschlusses (12), mit maximaler Antriebs- bzw. Motorleistung und der Einspritzvorgang, zumindest unmittelbar nach dem Öffnungszeitpunkt, ebenfalls mit maximaler Antriebs- bzw. Motorleistung fortgesetzt wird.

10. Einspritzeinheit, insbesondere für das Spritzen von dünnwandigen Spritzgiessteilen (76, 77) in Spritzgiesswerkzeugen, mit einem steuerbaren Aktivverschluss (12) für die Düsenöffnung einer elektrisch oder hydraulisch angetriebenen Einspritzschnecke (2), mit Steuermitteln für eine zweistufige Linearbewegung für einen Kompressionshub sowie für einen Einspritzhub der Einspritzschnecke, wobei der Aktivverschluss (12) zwischen Kompressionshub und Einspritzhub betätigbar ist,
**dadurch gekennzeichnet,**
**dass** sie Steuer-/Regelmittel aufweist für eine zweistufige unterbrechungsfreie Linearbewegung, für den Kompressionshub sowie für den Einspritzhub der Einspritzschnecke (2), wobei der Aktivverschluss (12) elektrische oder hydraulische Antriebsmittel aufweist, zur möglichst schlagartigen Öffnung des Aktivverschlusses (12).

11. Einspritzeinheit nach Anspruch 10,
**dadurch gekennzeichnet,**
**dass** die Steuer-Regelmittel sowie der Aktivverschluss derart ausgelegt sind, dass die Schieberöffnung in der oberen Hälfte, vorzugsweise in dem oberen Viertel des Aufbaues des spezifischen Schmelzedruckes im Schneckenvorraum durchführbar ist.

12. Einspritzeinhert nach Anspruch 11,
**dadurch gekennzeichnet,**
**dass** der Aktivverschluss (12) elektrische oder hydraulische Antriebsmittel aufweist zur möglichst schlagartigen Öffnung der Düse mit einer Zeitdauer des Öffnungsvorganges von weniger als 50 Millisekunden.

13. Einspritzeinheit nach einem der Ansprüche 10 bis 12,
**dadurch gekennzeichnet,**
**dass** der Aktivverschluss (12) am Düsenausgang der Einspritzschnecke (2) oder in dem Eintrittsbereich der Kavität des Spritzgiesswerkzeuges angeordnet und als Nadelventil, als Steckschieber oder als Drehschieber ausgebildet ist.

14. Einspritzeinheit nach einem der Ansprüche 10 bis 13,
**dadurch gekennzeichnet,**
**dass** bei jedem Spritzzyklus entsprechend der Grösse des Spritzgiessteiles (76, 77) zyklisch ein entsprechender totaler Schneckenhub durchführbar ist, wobei am Ende des Einspritzhubes nur ein kleines Massepolster verbleibt.

15. Einspritzeinheit nach einem der Ansprüche 10 bis 14,
**dadurch gekennzeichnet,**
**dass** der Linearantrieb für die Einspritzschnecke (2) einen Elektromotor aufweist, wobei der Elektromotor mit Leistungselektronik mit zugeordneten Rechner- sowie Steuer-/Regelmitteln (11), ausgebildet ist.

16. Einspritzeinheit nach einem der Ansprüche 10 bis 15,
**dadurch gekennzeichnet,**
**dass** der Einspritzeinheit Programmspeicher sowie Rechner (23) zugeordnet sind zur zyklischen Koordinierung der aktiven Öffnung des Verschlusses, derart, dass die volle Öffnung des Aktivverschlusses (12) etwa mit der maximalen Kompression der Schmelze zusammenfällt.

## Claims

1. Method for controlling/regulating the injection stroke and the compression stroke for the process of injection into the cavities of injection moulds, in particular for production of thin-walled injection moulded articles (76, 77) using an electrically or hydraulically driven injection screw, an active closure (12) being opened in a controlled manner at an optimum pressure in the compression space and/or at optimum melt compression, and the transition from melt compression to volume flow transfer being established, **characterised in that** the compression stroke develops into the injection stroke without interruption, with the active closure being opened as rapidly as possible.

2. Method according to claim 1, **characterised in that** the slide opening takes place in the upper half of the maximum specific melt pressure in the screw antechamber.

3. Method according to either claim 1 or claim 2, **characterised in that** the opening point in time of the active closure (12) is preferably selected so that expansion of the compressed melt and conversion to flow front velocity take place primarily in the cavities of the mould.

4. Method according to any one of claims I to 3, **characterised in that** the energy of the moving parts of the rotatory and/or translational masses accelerated during the compression stroke is utilised maximally to support the injection stroke.

5. Method according to any one of claims 1 to 4, **characterised in that** the drive of the injection screw (2) is provided by an electric motor and the pressure build-up in the screw antechamber before opening the active closure (12) takes place in such a way that the moving parts of the drive unit have the greatest possible kinetic energy at the start of the injection (active closure opening).

6. Method according to any one of claims I to 5, **characterised in that** the rotational speed of the electric drive motor of the injection screw in the opening of the slide is in the range of the maximum motor rotational speed, so that the energy of the moving parts of the rotatory and/or translational masses accelerated during the compression stroke is used to support the injection stroke maximally.

7. Method according to any one of claims 1 to 6, **characterised in that** the compression stroke for each injection cycle amounts to up to 40% of the total screw stroke.

8. Method according to any one of claims 1 to 7, **characterised in that** during and/or after opening of the nozzle, the speed of movement of the injection screw is maintained to prevent a drop in pressure in the screw antechamber.

9. Method according to any one of claims 1 to 8, **characterised in that** the pressure build-up in the compression space, at least before the opening point in time of the active closure (12), is continued at the maximum driving power and/or motor power, and the injection process, at least directly after the opening point in time, is also continued at the maximum driving power and/or motor power.

10. Injection unit, in particular for injection of thin-walled injection moulded articles (76, 77) in injection moulds having a controllable active closure (12) for the nozzle opening of an electrically or hydraulically driven injection screw (2), comprising control means for a two-step linear movement, for a compression stroke and for an injection stroke of the injection screw (2), wherein the active closure (12) can be operated between the compression stroke and the injection stroke, **characterised in that** it has control/regulating means for a two-step uninterrupted linear movement, for the compression stroke and for the injection stroke of the injection screw (2), the active closure having electric or hydraulic drive means for the most sudden possible opening of the active closure (12).

11. Injection unit according to claim 10, **characterised in that** the control and regulating means as well as the active closure are constructed so that the slide opening is implementable in the upper half, preferably in the upper quarter of the range of build-up of the specific melt pressure in the screw antechamber.

12. Injection unit according to claim 11, **characterised in that** the active closure (12) has electric or hydraulic drive means for the most sudden possible opening of the nozzle, with the opening process lasting less than 50 milliseconds.

13. Injection unit according to any one of claims 10 to 12, **characterised in that** the active closure (12) is arranged on the nozzle outlet of the injection screw (2) or in the inlet region of the cavity of the injection mould, and it is constructed as a needle valve, a plug slide valve or a rotary slide valve.

14. Injection unit according to any one of claims 10 to 13, **characterised in that** a corresponding total screw stroke can be implemented cyclically with each injection cycle in accordance with the size of the injection mould part (76, 77), only a small cushion of melt remaining at the end of the injection stroke.

15. Injection unit according to any one of claims 10 to 14, **characterised in that** the linear drive for the injection screw (2) has an electric motor, the electric motor being constructed with electronic power systems with associated computer means and control/regulating means (11).

16. Injection unit according to any one of claims 10 to 15, **characterised in that** the program memories and computers (23) are. assigned to the injection unit for cyclic coordination of the active opening of the closure such that the full opening of the active closure (12) corresponds approximately to the maximum compression of the melt.

## Revendications

1. Procédé de commande/de régulation de la course d'injection et de compression pour le procédé d'injection dans les cavités d'outils de moulage par injection, en particulier pour l'injection de pièces moulées par injection à parois minces (76, 77), avec une vis d'injection entraînée de façon électrique ou hydraulique, une fermeture active (12), dans le cas d'une pression optimale dans l'espace de compression et/ou dans le cas d'une compression optimale de la masse fondue, étant ouverte de façon contrôlée et créant le passage de la compression de la masse fondue au transfert de débit volumétrique,
**caractérisé en ce que**
la course de compression se transforme sans interruption en course d'injection et l'ouverture de la fermeture active s'effectue de la façon la plus subite possible.

2. Procédé selon la revendication 1,
**caractérisé en ce que**
l'ouverture du tiroir dans la moitié supérieure de la pression spécifique maximale de la masse fondue a lieu dans l'antichambre de la vis.

3. Procédé selon la revendication 1 ou 2,
**caractérisé en ce que**
le moment de l'ouverture de la fermeture active (12) est sélectionné de préférence que sorte que l'expansion de la masse fondue comprimée et la conversion en rapidité frontale de fluage s'effectuent au début dans les cavités du moule.

4. Procédé selon l'une des revendications 1 à 3,
**caractérisé en ce que**
l'énergie des parties déplacées des masses en rotation et/ou en translation accélérées pendant la course de compression, destinées à soutenir la course d'injection, est utilisée de façon maximale.

5. Procédé selon l'une des revendications 1 à 4,
**caractérisé en ce que**
l'entraînement de la vis d'injection (2) s'effectue de façon électromotrice et l'établissement de la pression dans l'antichambre de la vis s'effectuent avant l'ouverture de la fermeture active (12), de telle sorte que les parties déplacées de l'unité d'entraînement, au début de l'injection (ouverture de la fermeture active), disposent de l'énergie cinétique la plus élevée possible.

6. Procédé selon l'une des revendications 1 à 5,
**caractérisé en ce que**
le régime du moteur d'entraînement électrique de la vis d'injection, à l'occasion de l'ouverture du tiroir, se situe dans la plage du régime maximal du moteur, de sorte que l'énergie des parties déplacées des masses en rotation et/ou en translation accélérées pendant la course de compression, destinées à soutenir la course d'injection, est utilisée de façon maximale.

7. Procédé selon l'une des revendications 1 à 6,
**caractérisé en ce que**
la course de compression pour chaque cycle d'injection s'élève jusqu'à 40% de la course totale de la vis.

8. Procédé selon l'une des revendications 1 à 7,
**caractérisé en ce que**
après et/ou à l'occasion de l'ouverture de la buse, la vitesse de déplacement de la vis d'injection est maintenue pour éviter une baisse de pression dans l'antichambre de la vis.

9. Procédé selon l'une des revendications 1 à 8,
**caractérisé en ce que**
l'établissement de la pression dans l'espace de compression, au moins avant le moment de l'ouverture de la fermeture active (12), se poursuit avec une puissance d'entraînement et/ou motrice maximale et le procédé d'injection, au moins immédiatement après le moment de l'ouverture, se poursuit également avec une puissance d'entraînement et/ou motrice maximale.

10. Unité d'injection, en particulier pour l'injection de pièces moulées par injection à parois minces (76, 77) dans des outils de moulage par injection, avec une fermeture active (12) pouvant être commandée pour l'ouverture de la buse d'une vis d'injection (2) entraînée de façon électrique ou hydraulique, avec des moyens de commande pour un déplacement linéaire à deux étapes pour une course de compression ainsi que pour une course d'injection de la vis d'injection, la fermeture active (12) pouvant être actionnée entre la course de compression et la course d'injection,
**caractérisée en ce**
**qu'**elle comprend des moyens de commande/de régulation pour un déplacement linéaire sans interruption à deux étapes, pour la course de compression ainsi que pour la course d'injection de la vis d'injection (2), la fermeture active (12) comprenant des moyens d'entraînement électriques ou hydrauliques, en vue d'une ouverture de la fermeture active (12) la plus subite possible.

11. Unité d'injection selon la revendication 10,
**caractérisée en ce que**
les moyens de commande et de régulation ainsi que la fermeture active sont dimensionnés de telle sorte que l'ouverture du tiroir dans la moitié supérieure, de préférence dans le quart supérieur de la structure de la pression spécifique de la masse fondue, peut être réalisée dans l'antichambre de la vis.

12. Unité d'injection selon la revendication 11,
**caractérisée en ce que**
la fermeture active (12) comprend des moyens d'entraînement électriques ou hydrauliques, en vue d'une ouverture de la buse la plus subite possible, le procédé d'ouverture durant moins de 50 millisecondes.

13. Unité d'injection selon l'une des revendications 10 à 12,
**caractérisée en ce que**
la fermeture active (12) est disposée à la sortie de la buse de la vis d'injection (2) ou dans la zone d'entrée de la cavité de l'outil de moulage par injection et est conçue comme une soupape à pointeau, comme un tiroir à fiche ou comme un tiroir rotatif.

14. Unité d'injection selon l'une des revendications 10 à 13,
**caractérisée en ce**
**qu'**à l'occasion de chaque cycle d'injection, en fonction de la taille de la pièce moulée par injection (76, 77), une course totale de la vis correspondante peut être réalisée de façon cyclique, seul un petit coussin de matière restant à l'extrémité de la course d'injection.

15. Unité d'injection selon l'une des revendications 10 à 14,
**caractérisée en ce que**
l'entraînement linéaire pour la vis d'injection (2) comprend un moteur électrique, le moteur électrique étant conçu avec une électronique de puissance, comprenant un calculateur associé -ainsi qu'avec des moyens de commande/de régulation (11).

16. Unité d'injection selon l'une des revendications 10 à 15,
**caractérisée en ce que**
des horloges programmatrices ainsi que des calculateurs (23) sont associés à l'unité d'injection en vue de la coordination cyclique de l'ouverture active de la fermeture, de telle sorte que l'ouverture totale de la fermeture active (12) coïncide approximativement avec la compression maximale de la masse fondue.
